# EUROPEAN PATENT APPLICATION

(11) **EP 4 811 274 A1**
(43) Date of publication of application: **23.09.2026**
(21) Application number: 23958781.9
(22) Date of filing: 13.11.2023
(51) Int. Cl.: G06T 7/00

(54) **LAND USE CLASSIFICATION SYSTEM, LAND USE CLASSIFICATION METHOD, AND LAND USE CLASSIFICATION PROGRAM**

(71) Applicant: Mitsubishi Electric Corporation, Tokyo 100-8310 (JP)
(72) Inventor: KURIHARA, Kohei, Tokyo 100-8310 (JP); ONODA, Fumiya, Tokyo 100-8310 (JP)
(74) Representative: Hoffmann Eitle
(86) International application number: PCT/JP2023/040679
(87) International publication number: WO 2025/104767

(57) **Abstract**

A land use classification system includes a learning device (20) including a model generation unit (202). The model generation unit (202) generates a learned model for inferring a land use map indicating a land use status in an observation area on a first reference image from a simulated satellite image (D102) by learning correspondence between the simulated satellite image (D102) and the land use map using learning data and based on machine learning, the learning data including combination of the simulated satellite image (D102) and the land use map, the first reference image being a reference high-resolution image having a higher resolution than a resolution of a first satellite image being a target satellite image captured by a target satellite, the simulated satellite image (D102) being an image that is generated by applying degradation processing to the first reference image and has a resolution equivalent to the resolution of the first satellite image. The first satellite image is used in an inference process that uses the learned model.

## Description

### Technical Field

The present disclosure relates to a land use classification system, a land use classification method, and a land use classification program. More particularly, the present disclosure relates to a learning method for a land use classification technique directed to remote sensing data.

### Background Art

An administrative agency, a designated public institution, and the like has the task of ascertaining a land use status of a large area such as an urban area and a mountain area. Such tasks have traditionally been achieved through field surveys at the site of interest. However, those tasks are limited in terms of work time, work range, and the like.

More recently, an analysis scheme that makes use of remote sensing data has been proposed as an alternative to ascertain the land use status of a large area. Specific examples of remote sensing include schemes using aircrafts or UAVs (drones), as well as schemes using optical satellites or synthetic aperture radar satellites. Optical satellite images are used as means of monitoring various objects on the ground surface.

Here, some land use status determination techniques use a classifier generated in advance by machine learning to automatically determine a land use status from a remote sensing image. A specific example of such land use status determination techniques is semantic segmentation technique.

According to a land use status determination technique, data representing a certain remote sensing image is prepared as an input image, data representing a label image with labeling of ground objects on the ground surface that are present in the remote sensing image is generated and prepared as a teacher image, and machine learning is performed with the prepared data as a pair, thus generating a land use status determination model (see Patent Literature 1, for example).

### Citation List

### Patent Literature

Patent Literature 1: JP 2019-046416 A1

### Summary of Invention

### Technical Problem

Patent Literature 1 discloses a scheme that estimates the position and shape of a building from an input image. For the task of classifying a land use status, including the prior art, pre-learned models with generalized high performance are publicly available.

When a user applies a pre-learned model to the user's own remote sensing data and tasks, one issue is that sufficient performance cannot be provided primarily due to the influence of difference in domain (or feature) that exists between a learning dataset for a publicly available pre-learned model and the user's own data. Such difference occurs, as a specific example, because data used as the learning dataset is often aerial images of high resolution, whereas optical satellite images of low resolution are used as the user's own data.

There is also a means for manual labeling on the basis of one's own optical satellite images. However, such a means has a disadvantage of being unable to secure a sufficient amount of learning dataset and variations in data in terms of work time.

Therefore, one or more aspects of the present disclosure relate to a learning method for a learned model to classify a land use status with optical satellite images, and one object is to provide a learning method for generating a learned model that classifies a land use status with relatively high accuracy when an actual optical satellite image is input to the learned model.

### Solution to Problem

A land use classification system according to the present disclosure includes:
a learning device, the learning device including a model generation unit to generate a learned model for inferring a land use map indicating a land use status in an observation area on a first reference image from a simulated satellite image by learning correspondence between the simulated satellite image and the land use map using learning data and based on machine learning, the learning data including combination of the simulated satellite image and the land use map, the first reference image being a reference high-resolution image having a higher resolution than a resolution of a first satellite image being a target satellite image captured by a target satellite, the simulated satellite image being an image that is generated by applying degradation processing to the first reference image and has a resolution equivalent to the resolution of the first satellite image, wherein
the first satellite image is used in an inference process that uses the learned model.

### Advantageous Effects of Invention

According to the present disclosure, a learned model that generates a learned model for inferring a land use map from a simulated satellite image is generated. Here, the simulated satellite image is a pseudo optical satellite image generated by applying degradation processing to the reference high-resolution image.

Thus, one or more aspects of the present disclosure can provide a learning method for generating a learned model that can classify a land use status on the ground surface from an optical satellite image with relatively high accuracy when an optical satellite image is input to the learned model.

### Brief Description of Drawings

Fig. 1 shows a configuration example of a land use classification system 1 according to Embodiment 1.
Fig. 2 shows a configuration example of an input image generation device 10 according to Embodiment 1.
Fig. 3 shows a configuration example of a degradation processing unit 102 according to Embodiment 1.
Fig. 4 shows a configuration example of a learning device 20 according to Embodiment 1.
Fig. 5 schematically illustrates a neural network.
Fig. 6 shows a configuration example of an inference device 30 according to Embodiment 1.
Fig. 7 shows a hardware configuration example of the input image generation device 10 according to Embodiment 1.
Fig. 8 is a flowchart illustrating operations of the learning device 20 according to Embodiment 1.
Fig. 9 is a flowchart illustrating operations of the inference device 30 according to Embodiment 1.
Fig. 10 shows a configuration example of an input image generation device 10b according to a modification of Embodiment 1.
Fig. 11 shows a hardware configuration example of the input image generation device 10 according to a modification of Embodiment 1.

### Description of Embodiments

In the description of embodiments and the drawings, the same elements and the corresponding elements are given the same reference characters. Description on elements with the same reference characters are omitted or simplified as appropriate. Arrows in the drawings primarily indicate flow of data or flow of processing. Also, a "unit" can be read as a "circuit", "step", "procedure", "process", or "circuitry" as appropriate.

### Embodiment 1.

The present embodiment is described in detail below with reference to drawings.

### ***Description of configuration***

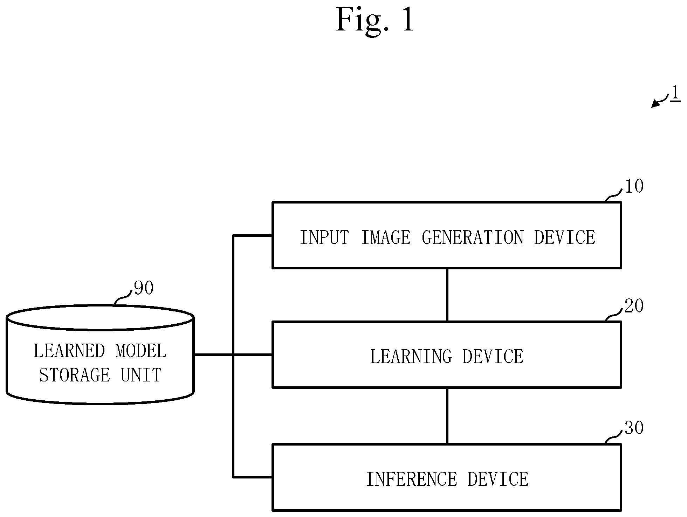

Fig. 1 is a block diagram schematically showing a configuration example of a land use classification system 1 according to Embodiment 1. The land use classification system 1 is a system to implement a land use classification technique that estimates a land use status on the ground surface from a satellite image on the basis of machine learning.

The land use classification system 1 includes an input image generation device 10 to generate input images for learning, a learning device 20 to function as a model generation device, an inference device 30 to function as an application device, and a learned model storage unit 90. A processing method performed in the inference device 30 represents an application method. The multiple devices included in the land use classification system 1 may be integrally configured, if desired.

In the land use classification system 1, a target satellite image DIN3 is classified according to land use using a learned model. In this process, a land use label may be allocated to the target satellite image DIN3. A land use label is a label indicative of a land use status. A specific example of a land use label can be a label indicating one of "building", "road", "water body", "forest", "bare land", and "farmland". The land use classification system 1 may allocate one land use label to the entire target satellite image DIN3 or may allocate a land use label to each one of ground objects present in the target satellite image DIN3. The process of allocating a label to an image is also called segmentation.

A learned model is an inference model that is generated through execution of machine learning by the learning device 20. In generation of the learned model, a pre-learned model from an open source is utilized as a specific example.

The pre-learned model is an inference model that infers a land use map from a satellite image. In general, for a pre-learned model, images of higher resolution than the resolution of the target satellite image DIN3 are used.

The learned model storage unit 90 stores the pre-learned model and the learned model.

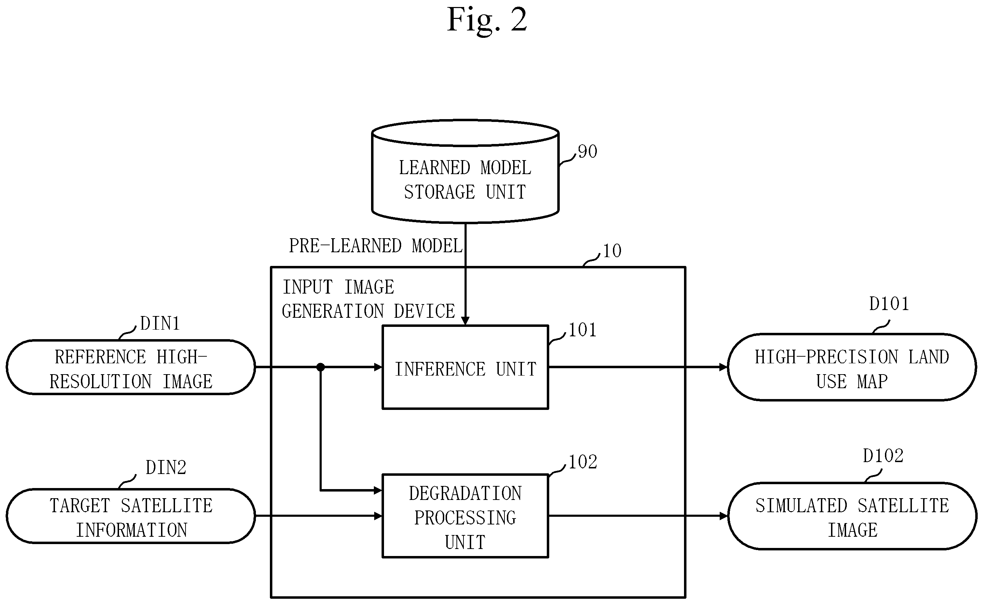

Fig. 2 is a block diagram schematically showing a configuration example of the input image generation device 10.

The input image generation device 10 includes an inference unit 101 and a degradation processing unit 102.

The inference unit 101 retrieves the pre-learned model from the learned model storage unit 90 and inputs a reference high-resolution image DIN1 to the retrieved pre-learned model, thus generating a high-precision land use map D101. The inference unit 101 can classify a land use status with relatively high accuracy by using the pre-learned model.

The degradation processing unit 102 performs degradation processing.
Specifically, the degradation processing unit 102 takes the reference high-resolution image DIN1 and a target satellite information DIN2 as input and applies degradation processing to the reference high-resolution image DIN1, thereby generating a simulated satellite image D102. A satellite image is an image captured by an artificial satellite, and an optical satellite image as a specific example.

The degradation processing is processing that generates a satellite image for a target satellite in a simulated manner by degrading the reference high-resolution image DIN1. The degradation processing may be processing that corresponds to the target satellite information DIN2. If the degradation processing is not processing corresponding to the target satellite information DIN2, the target satellite information DIN2 may not be input to the degradation processing unit 102.

The reference high-resolution image DIN1 is an image acquired with a remote sensing scheme that is capable of acquiring images of higher resolution than the resolution of the target satellite image DIN3, as a specific example. Specific examples of such remote sensing schemes include an aerial imagery means using a Heli-Sat (helicopter-satellite communication system), UAV (Unmanned Aerial Vehicle), or aircraft, as well as means based on a satellite capable of capturing an image of a higher resolution than the resolution of the target satellite image DIN3.

The target satellite information DIN2 is information related to the target satellite and indicating the configuration and features of the target satellite, as a specific example. The target satellite is an artificial satellite that captures the target satellite image DIN3.

The target satellite image DIN3 is a satellite image used in an inference process that uses the learned model.

The high-precision land use map D101 is a land use map that indicates a land use status estimated as the land use status in an observation area on the reference high-resolution image DIN1.

The simulated satellite image D102 is a pseudo satellite image.

The degradation processing is, as a specific example, processing for simulating degradation of an image due to at least one of sensor layout, PSF (Point Spread Function) characteristics, GSD (Ground Sampling Distance), sensitivity performance, and noise characteristics of the target satellite, data compression processing during generation of the target satellite image DIN3, quantization processing during generation of the target satellite image DIN3, and the like.

An example of degradation processing using sensor layout information for the target satellite will be described. In many cases, an optical satellite carries multiple sensors different from each other according to wavelength bands at which light is received, and multi-band images from those sensors are combined to generate a composite image as a satellite image. In this process, color shift can occur in the composite image due to the effect of an amount of difference in physical layout position among the sensors. Here, color shift can also occur in subpixels. The degradation processing unit 102 can generate a simulated satellite image D102 reproducing color shift in subpixels by performing down-sampling with a varying down-sampling offset (binning start position) from band to band during down-sampling from the reference high-resolution image DIN1. That is, degradation processing may also be processing that performs down-sampling with offsets that are different from each other according to wavelength bands in the down-sampling of the reference high-resolution image DIN1.

An example of degradation processing using the PSF of the target satellite will be described. For an optical satellite image, a PSF is determined as a resolution index by combining multiple degradation models for influence of sensors, optical performance, aperture shape, disturbance, image flow, and the like. Likewise, the reference high-resolution image DIN1 also has a PSF as a resolution index taking into account the influence of sensors, optical performance, disturbance, and the like. It is possible to perform degradation processing that applies a target PSF to the reference high-resolution image DIN1 using the PSF of the target satellite and the PSF of the reference high-resolution image DIN1 to thereby convert the resolution of the reference high-resolution image DIN1 into a resolution equivalent to the resolution of the target satellite image and generate the simulated satellite image D102. Specific examples of degradation processing using PSF can be a method where PSFs are multiplied in frequency space or a method where PSFs are convolution-integrated with the reference high-resolution image DIN1.

Furthermore, when the PSF is determined for each band, the PSF can be different from band to band. As a specific example, due to the fact that the MTF (Modulated Transfer Function) of a multispectral band is higher than the PSF of a panchromatic band, aliasing may have occurred in a multispectral image. The degradation processing unit 102 can also reproduce aliasing in the simulated satellite image D102 by introducing such a difference in PSF into the degradation processing.

An example of degradation processing using the GSD of the target satellite will be described. The degradation processing unit 102 compares the GSD of the reference high-resolution image DIN1 with the GSD of the target satellite and simulates the GSD with a down-sampling scheme such as bi-linear interpolation or bi-cubic interpolation.

When degradation processing using GSD is performed, the ratio between the GSD of the reference high-resolution image DIN1 and the GSD of the target satellite is preferably equal to or higher than a high resolution magnification factor of the land use classification system 1.

An example of degradation processing using the sensitivity performance of the target satellite will be described. From the sensitivity performance of the target satellite and a quantity of light from an assumed subject, an SN ratio (Signal to Noise Ratio) of the target satellite image can be estimated. Given that noise is additive white Gaussian noise, the SN ratio is related to a standard deviation of Gaussian noise. Accordingly, the degradation processing unit 102 can also perform degradation processing that applies noise equivalent to the noise of the target satellite image based on the SN ratio to the reference high-resolution image DIN1.

If noise characteristics other than additive white Gaussian noise can be acquired from the target satellite information DIN2, for example, if information indicating banding noise or FPN (Fixed Pattern Noise) can be obtained, the degradation processing unit 102 can also perform degradation processing that adds the noise characteristics obtained to the reference high-resolution image DIN1.

If the target satellite image DIN3 is a thermal infrared image, the degradation processing unit 102 can also perform degradation processing that adds noise characteristics, such as shot noise due to internal radiation, 1/f noise, or shading, to the reference high-resolution image DIN1.

Another possible noise element is influence of the atmosphere. An example of degradation processing with simulation of the atmosphere will be described. When a high-resolution remote sensing scheme is imaging means from within the atmosphere, the reference high-resolution image DIN1 does not contain noise caused by the atmosphere. In contrast, a satellite image contains noise such as reduced image contrast, shielding, and disturbance caused by the atmosphere.

The degradation processing unit 102 can generate such image degradations caused by the atmosphere on the basis of a publicly available atmosphere model and add the generated image degradations to the reference high-resolution image DIN1, thus generating the simulated satellite image D102.

An example of degradation processing based on compression of data from the target satellite will be described. When the target satellite image is downlinked to a ground station, data compression is performed on it. Here, if the data compression is performed as lossy compression, image quality degradation associated with the compression will occur. The degradation processing unit 102 can reproduce the degradation by applying data compression similar to the data compression in question to the reference high-resolution image DIN1.

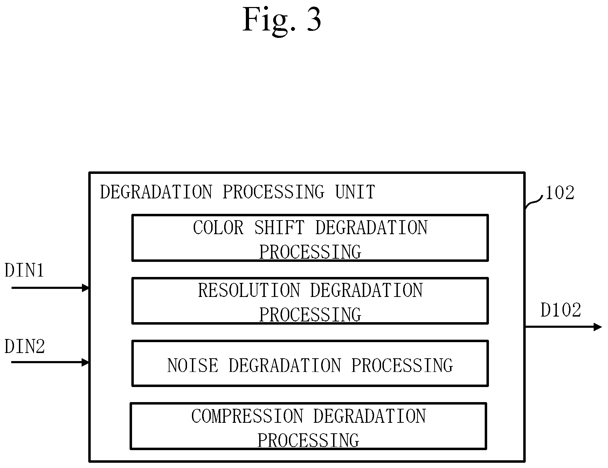

Fig. 3 is a block diagram schematically showing a configuration example of the degradation processing unit 102. The degradation processing unit 102 in this example performs any one or combination of color shift degradation processing, resolution degradation processing, noise degradation processing, and compression degradation processing.

The compression degradation processing is processing for simulating image degradation due to data compression.

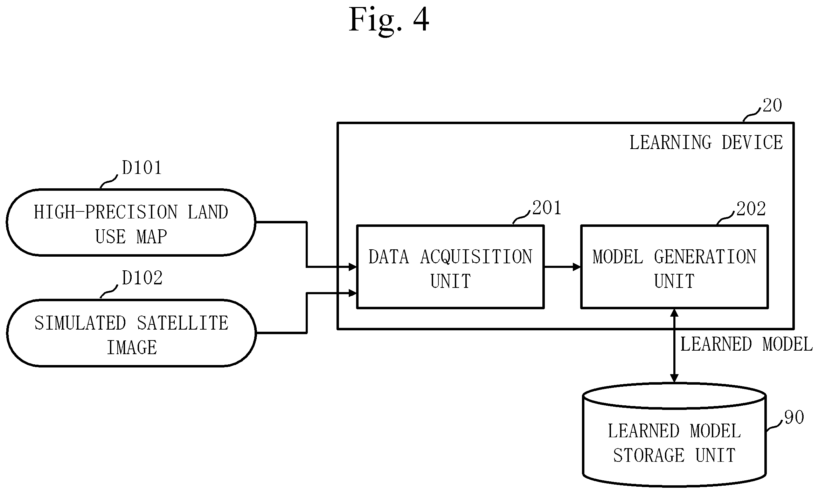

Fig. 4 is a block diagram schematically showing a configuration example of the learning device 20.

The learning device 20 includes a data acquisition unit 201 and a model generation unit 202.

The data acquisition unit 201 acquires learning data.

Here, the learning data is teacher data that indicates combination of the simulated satellite image D102 and the reference high-resolution image DIN1 representing a correct answer to be inferred from the target satellite image DIN3. The learning data obtained is provided to the model generation unit 202.

The model generation unit 202 learns the high-precision land use map D101 corresponding to the simulated satellite image D102 based on the learning data provided by the data acquisition unit 201. In other words, the model generation unit 202 generates a learned model for inferring an optimal high-precision land use map D101 corresponding to the target satellite image DIN3 by learning the combination of the simulated satellite image D102 and the high-precision land use map D101 indicated by the learning data. In this process, the model generation unit 202 may generate a learned model by modifying a pre-learned model.

The model generation unit 202 then stores the generated learned model in the learned model storage unit 90.

As a specific example, the model generation unit 202 generates a learned model for inferring a land use map from the simulated satellite image D102 by learning the correspondence between the simulated satellite image D102 and the land use map based on machine learning using learning data including combination of the simulated satellite image D102 and a land use map indicating the land use status in the observation area on a first reference image. In this example, the simulated satellite image D102 is an image that is generated by applying degradation processing to the first reference image, which is the reference high-resolution image DIN1, and that has a resolution equivalent to the resolution of the first satellite image. An image with a resolution equivalent to the resolution of the first satellite image may be an image with the same resolution as the resolution of the first satellite image or may be an image with a resolution close to the resolution of the first satellite image. The first satellite image is the target satellite image DIN3 captured by the target satellite. A land use map in this example corresponds to the high-precision land use map D101. The reference high-resolution image DIN1 in this example has a resolution higher than the resolution of the first satellite image.

The model generation unit 202 can use a known algorithm, such as supervised learning, unsupervised learning, or reinforcement learning, as a learning algorithm. As an example, a case of applying a neural network to a learned model is described here.

When the model generation unit 202 uses supervised learning, the simulated satellite image D102 and the high-precision land use map D101 indicated by the learning data need to be a pair of data that contain the same subject.

When the model generation unit 202 uses unsupervised learning, the simulated satellite image D102 and the high-precision land use map D101 do not need to contain the same subject.

As a specific example, the model generation unit 202 learns the high-precision land use map D101 corresponding to the simulated satellite image D102 by so-called supervised learning in accordance with a neural network model.

Here, supervised learning refers to a scheme where a set of data indicating inputs and data indicating results corresponding to the inputs is given to a learning device as learning data, and the learning device learns features present in the learning data and infers a result from an input based on the results of learning.

A neural network is formed from an input layer consisting of multiple neurons, an intermediate layer (hidden layer) consisting of multiple neurons, and an output layer consisting of multiple neurons. The number of layers in the intermediate layer may be one, or two or more layers.

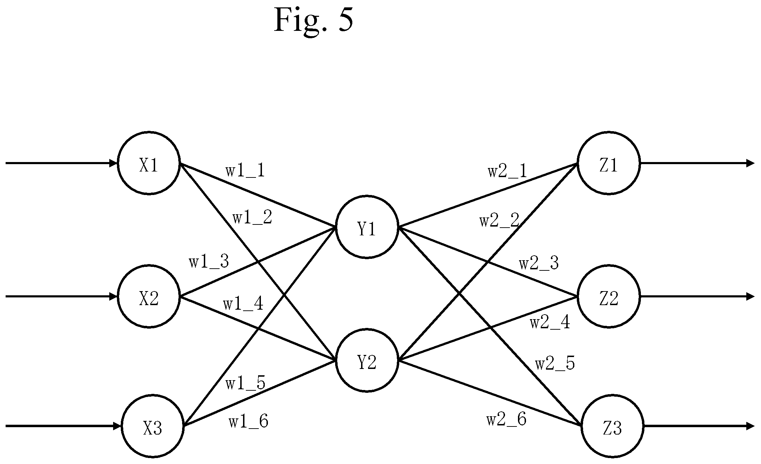

Fig. 5 is a schematic diagram showing an example of a three-layer neural network.

As shown in Fig. 5, in the case of using a three-layer neural network, when multiple input values are input to input layers X1 to X3, the input values are each multiplied by first weights w1_1 to w1_6 (hereinafter also called a first weight W1) as appropriate. Computed values which are values determined by multiplying the input values with the first weights w1_1 to w1_6 as appropriate are input to an intermediate layer Y1 and an intermediate layer Y2. The computed values are each multiplied by second weights w2_1 to w2_6 (hereinafter also called a second weight W2) as appropriate. Output values which are values determined by multiplying the computed values with the second weights w2_1 to w2_6 as appropriate are output from output layers Z1 to Z3. Each output value varies depending on the value of the first weight W1 and the value of the second weight W2.

In the present embodiment, the model generation unit 202 learns a learned model for inferring an optimal high-precision land use map D101 corresponding to the simulated satellite image D102 by so-called supervised learning in accordance with combinations of the simulated satellite image D102 and the high-precision land use map D101 indicated by the learning data acquired by the data acquisition unit 201.

That is, as a specific example, the model generation unit 202 adjusts the first weight W1 and the second weight W2 in the learning process of a learned model so that a result that is output by the output layer in response to input of a simulated satellite image D102 to the input layer approaches the high-precision land use map D101 representing the correct answer, for a neural network related to the learned model.

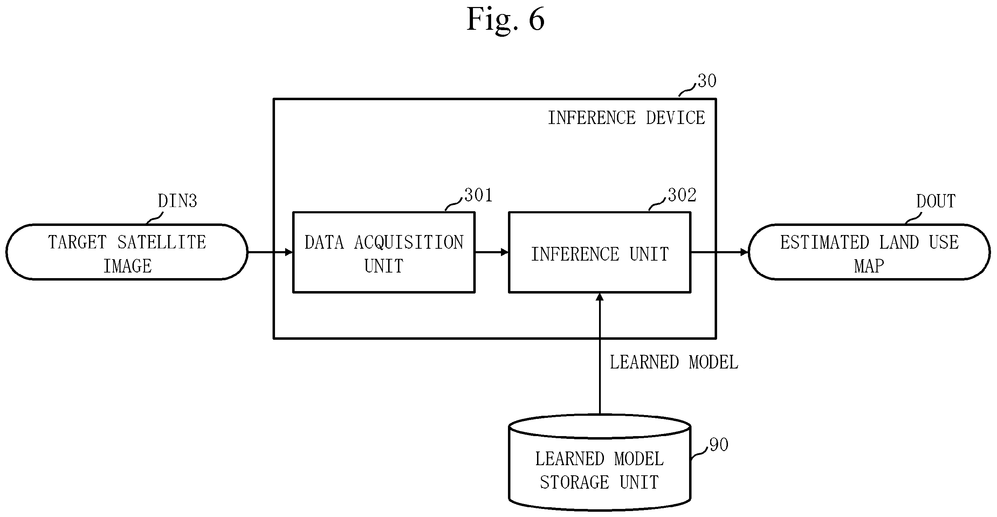

Fig. 6 is a block diagram schematically showing a configuration example of the inference device 30. The inference device 30 includes a data acquisition unit 301 and an inference unit 302.

The inference device 30 uses the learned model provided by the learning device 20 to infer an estimated land use map DOUT from the target satellite image DIN3. The target satellite image DIN3 is an image acquired from the target satellite.

The data acquisition unit 301 has a function of acquiring the target satellite image DIN3. The acquired target satellite image DIN3 is provided to the inference unit 302. It is assumed that a target subject is present in the target satellite image DIN3.

The inference unit 302 infers an estimated land use map DOUT corresponding to the target subject from the target satellite image DIN3 using the learned model stored in the learned model storage unit 90. That is, the inference unit 302 inputs the target satellite image DIN3 in question to the learned model to acquire an estimated land use map DOUT that is inferred from the input target satellite image DIN3 and corresponds to the target subject.

An estimated land use map DOUT corresponding to a certain target satellite image DIN3 is a land use map indicating a land use status that is estimated as the land use status in the observation area on the target satellite image DIN3.

As a specific example, the inference unit 302 infers the land use map indicating the land use status in the observation area on the first satellite image by inputting the first satellite image to the learned model.

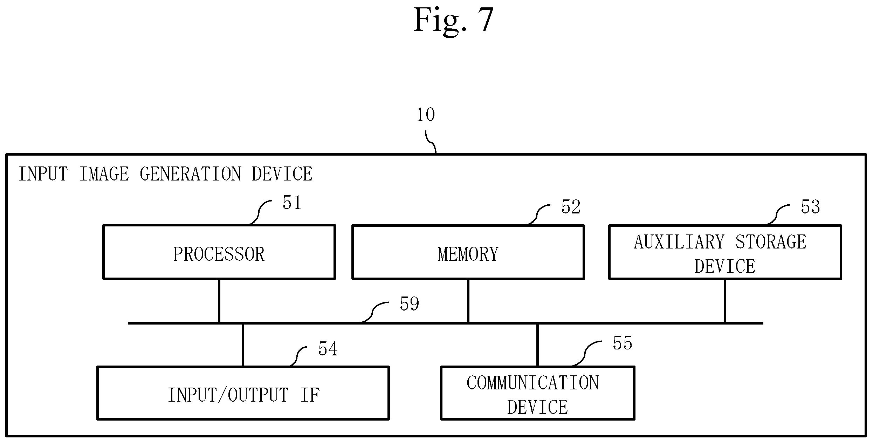

Fig. 7 shows a hardware configuration example of the input image generation device 10 according to the present embodiment. The input image generation device 10 is composed of a computer. The input image generation device 10 may be composed of more than one computer.

As shown in this diagram, the input image generation device 10 is a computer including pieces of hardware such as a processor 51, a memory 52, an auxiliary storage device 53, an input/output IF (Interface) 54, and a communication device 55. These pieces of hardware are appropriately connected via signal lines 59.

The processor 51 is an IC (Integrated Circuit) that performs arithmetic processing and controls the hardware included with the computer. The processor 51 can be a CPU (Central Processing Unit), a DSP (Digital Signal Processor), or a GPU (Graphics Processing Unit) as specific examples.

The input image generation device 10 may also include multiple processors to replace the processor 51. The multiple processors share the roles of the processor 51.

The memory 52 is typically a volatile storage device, and is a RAM (Random Access Memory) as a specific example. The memory 52 is also called a main storage device or a main memory. Data stored in the memory 52 is saved in the auxiliary storage device 53 as needed.

The auxiliary storage device 53 is typically a non-volatile storage device, and is a ROM (Read Only Memory), an HDD (Hard Disk Drive), or a flash memory as specific examples. Data stored in the auxiliary storage device 53 is loaded into the memory 52 as needed.

The memory 52 and the auxiliary storage device 53 may also be integrally configured.

The input/output IF 54 is a port to which input devices and output devices are connected. The input/output IF 54 is a USB (Universal Serial Bus) terminal as a specific example. The input devices are a keyboard and a mouse as specific examples. The output device is a display as a specific example.

The communication device 55 is a receiver and a transmitter. The communication device 55 is a communication chip or a NIC (Network Interface Card) as specific examples.

The components of the input image generation device 10 may use the input/output IF 54 and the communication device 55 as appropriate when communicating with other devices or the like.

The auxiliary storage device 53 stores a land use classification program. The land use classification program is a program that causes a computer to implement the functions of the components provided in the input image generation device 10. The land use classification program is loaded to the memory 52 and executed by the processor 51. The functions of the components included in the input image generation device 10 are implemented by software.

Data for use in execution of the land use classification program, data resulting from execution of the land use classification program, and the like are stored in a storage device as necessary. The components of the input image generation device 10 utilize the storage device as necessary. The storage device is formed of at least one of the memory 52, the auxiliary storage device 53, a register in the processor 51, and a cache memory in the processor 51. Note that the term "data" and the term "information" may have an equivalent meaning. The storage device may be independent of the computer.

The functions of the memory 52 and the auxiliary storage device 53 may also be implemented by other storage device.

The land use classification program may be recorded on a computer-readable, non-volatile recording medium. The non-volatile recording medium can be an optical disk or a flash memory as specific examples. The land use classification program may be provided as a program product.

The hardware configurations of the other devices included in the land use classification system 1 may be similar to the hardware configuration of the input image generation device 10.

### ***Description of operation***

An operational procedure of each device included in the land use classification system 1 is generally called a land use classification method. A program for implementing the operation of each device included in the land use classification system 1 is generally called a land use classification program.

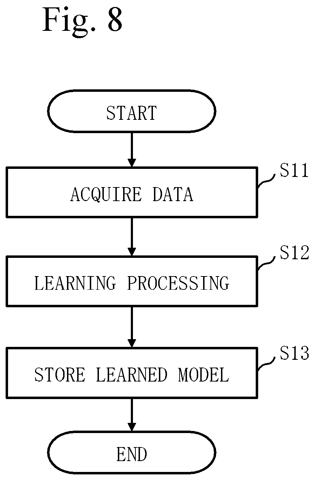

Fig. 8 is a flowchart illustrating an example of a process for learning of the learning device 20. Using Fig. 8, the process for the learning device 20 will be described.

### (Step S11)

The data acquisition unit 201 acquires learning data via the input image generation device 10. The acquired learning data is provided to the model generation unit 202.

### (Step S12)

The model generation unit 202 generates a learned model by learning the high-precision land use map D101, which is the output corresponding to the simulated satellite image D102, by so-called supervised learning based on the combination of the simulated satellite image D102 and the high-precision land use map D101 indicated by the learning data.

### (Step S13)

The learned model storage unit 90 stores the generated learned model.

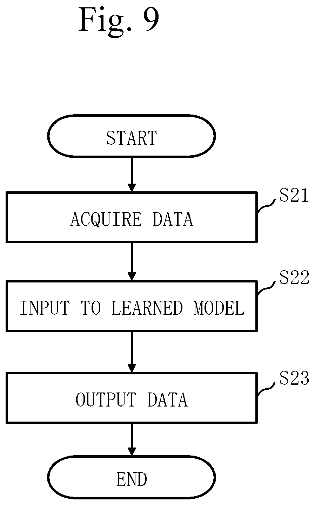

Fig. 9 is a flowchart illustrating an example of a process for the inference device 30 to infer an estimated land use map DOUT corresponding to the target satellite image DIN3. Using Fig. 9, the process for the inference device 30 will be described.

### (Step S21)

The data acquisition unit 301 acquires the target satellite image DIN3. The acquired target satellite image DIN3 in question is provided to the inference unit 302.

### (Step S22)

The inference unit 302 inputs the target satellite image DIN3 in question to the learned model stored in the learned model storage unit 90 to infer an estimated land use map DOUT corresponding to the input target satellite image DIN3 in question.

### (Step S23)

The inference device 30 outputs the estimated land use map DOUT generated through inference.

### ***Description of effect of Embodiment 1***

As described above, according to the land use classification system 1 in Embodiment 1, which is related to a learning method for a land use classification model directed to optical satellite images, when an actual satellite image is input to a learned model, the land use status in the observation area on the actual satellite image can be classified with relative high accuracy.

### ***Other configurations***

### <Modification 1>

Embodiment 1 was described for the case of applying supervised learning as the learning algorithm used by the model generation unit 202. However, Embodiment 1 is not limited to such an example.

As a specific example, reinforcement learning, unsupervised learning, semi-supervised learning, or the like may also be used as the learning algorithm aside from supervised learning.

### <Modification 2>

The model generation unit 202 may learn estimated land use maps corresponding to simulated satellite images in accordance with learning data that are created for multiple land use classification systems, including the land use classification system 1. The model generation unit 202 may acquire learning data from multiple land use classification systems that are used in the same area, or may learn estimated land use maps corresponding to simulated satellite images by utilizing learning data collected from multiple land use classification systems that operate independently in different areas from each other.

### <Modification 3>

The model generation unit 202 may add a land use classification system from which to collect learning data to the systems of interest or may remove a land use classification system from the systems of interest during the process.

Furthermore, the model generation unit 202 may apply a learned model that has learned estimated land use maps corresponding to simulated satellite images in relation to one land use classification system 1 to a different land use classification system, and re-learn estimated land use maps corresponding to simulated satellite images in relation to the different land use classification system to update the learned model.

### <Modification 4>

Deep learning, which is a learning algorithm that learns extraction of feature values themselves, may be employed for the learning algorithm used by the model generation unit 202. The model generation unit 202 may also perform machine learning in accordance with other known methods, such as genetic programming, functional logic programming, or support vector machine as specific examples.

### <Modification 5>

In cases where target satellite images DIN3 observing the same region as the observation area of the reference high-resolution image DIN1 are available, the learning device 20 may learn a learned model using learning data consisting a pair of an aligned satellite image D103 and the high-precision land use map D101 corresponding to the reference high-resolution image DIN1.

The aligned satellite image D103 is a satellite image generated by performing alignment relative to the reference high-resolution image DIN1 on the target satellite image DIN3.

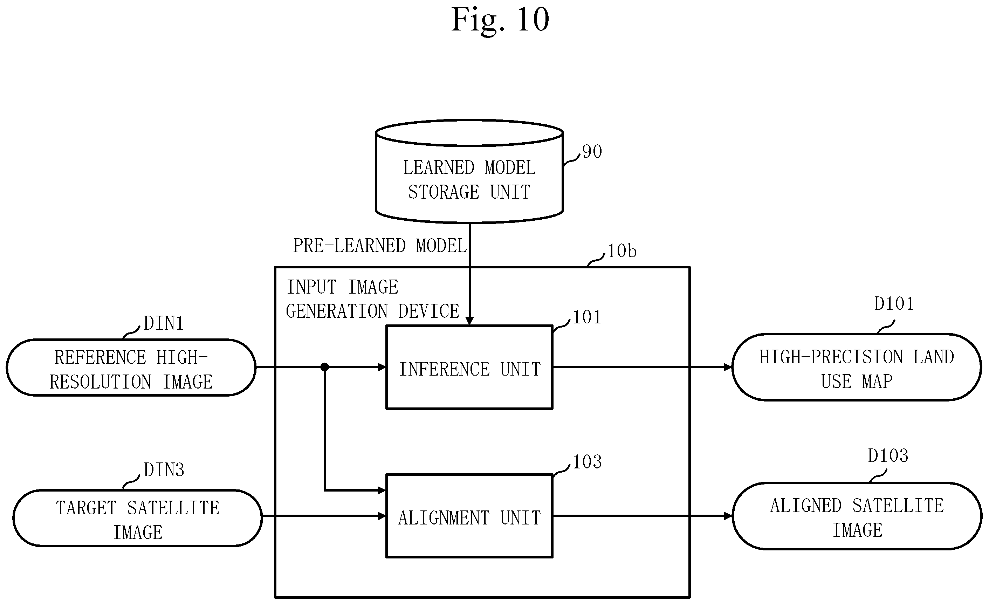

Fig. 10 shows an example of the configuration of an input image generation device 10b when such learning data is used. The input image generation device 10b includes an alignment unit 103 instead of the degradation processing unit 102. Instead of the target satellite information DIN2, the target satellite image DIN3 is input to the input image generation device 10b.

The alignment unit 103 generates the aligned satellite image D103 by performing alignment between the reference high-resolution image DIN1 and the target satellite image DIN3.

As a specific example, learning data contains a pair of a second satellite image and a land use map indicating a land use status in the observation area on a second reference image. The alignment unit 103 then performs alignment processing between the second reference image and the second satellite image, thereby generating the aligned satellite image D103 as an image corresponding to the second satellite image. The second reference image is the reference high-resolution image DIN1. The second satellite image is the target satellite image DIN3 that includes the observation results for the same area as the observation area on the second reference image. In this example, the learned model is a model that is generated by learning correspondence between the second satellite image and the land use map corresponding to the second reference image based on machine learning and that infers a land use map corresponding to the second reference image from the second satellite image.

A timing of observation of the target satellite image DIN3 is preferably close to the timing of observation of the reference high-resolution image DIN1; however, this may not be the case with a region where there is little change in land use.

In some cases, alignment processing between the reference high-resolution image DIN1 and the target satellite image DIN3 can be necessary in generation of learning data. The alignment unit 103 implements alignment processing in such a case.

### <Modification 6>

The target satellite image DIN3 may be an image captured with exposure to a light ray with a wavelength in a visible light band or an image captured with exposure to a light ray with a wavelength in an infrared light band, such as near infrared light band or far infrared light (thermal infrared) band.

### <Modification 7>

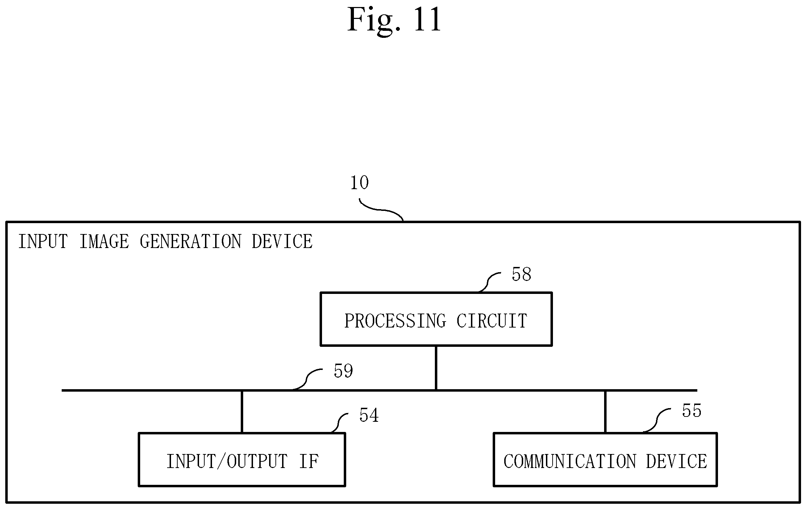

Fig. 11 shows a hardware configuration example of the input image generation device 10 according to this modification.

The input image generation device 10 includes a processing circuit 58 in place of the processor 51, the processor 51 and the memory 52, the processor 51 and the auxiliary storage device 53, or the processor 51 and the memory 52 and the auxiliary storage device 53.

The processing circuit 58 is hardware that implements at least some of the components included in the input image generation device 10.

The processing circuit 58 may be dedicated hardware or may be a processor that executes programs stored in the memory 52.

When the processing circuit 58 is dedicated hardware, the processing circuit 58 can be a single circuit, a composite circuit, a programmed processor, a parallel-programmed processor, an ASIC (Application Specific Integrated Circuit), an FPGA (Field Programmable Gate Array), or a combination thereof, as specific examples.

The input image generation device 10 may include multiple processing circuits to replace the processing circuit 58. The multiple processing circuits share the roles of the processing circuit 58.

In the input image generation device 10, some of the functions may be implemented by dedicated hardware and the remaining functions may be implemented by software or firmware.

The processing circuit 58 is implemented by hardware, software, firmware, or a combination thereof, as specific examples.

The processor 51, the memory 52, the auxiliary storage device 53, and the processing circuit 58 are collectively called "processing circuitry". That is, the functions of the functional components of the input image generation device 10 are implemented by the processing circuitry.

The hardware configurations of the other devices included in the land use classification system 1 may be similar to this modification.

### ***Other embodiments***

While Embodiment 1 has been described, a number of parts of the present embodiment may be implemented in combination. Alternatively, the present embodiment may be partially implemented. In addition, various modifications may be made to the present embodiment as desired, and the present embodiment may be implemented in its entirety, in part, or in any combination.

The embodiment described above is essentially a preferred example and is not intended to limit the present disclosure, its applications, and the scope of its use. Procedures described with flowcharts and the like may be modified if desired.

### Reference Signs List

1: land use classification system; 10, 10b: input image generation device; 101: inference unit; 102: degradation processing unit; 103: alignment unit; 20: learning device; 201: data acquisition unit; 202: model generation unit; 30: inference device; 301: data acquisition unit; 302: inference unit; 51: processor; 52: memory; 53: auxiliary storage device; 54: input/output IF; 55: communication device; 58: processing circuit; 59: signal line; 90: learned model storage unit; DIN1: reference high-resolution image; DIN2: target satellite information; DIN3: target satellite image; D101: high-precision land use map; D102: simulated satellite image; D103: aligned satellite image; DOUT: estimated land use map.

## Claims

1. A land use classification system comprising:
a learning device, the learning device including a model generation unit to generate a learned model for inferring a land use map indicating a land use status in an observation area on a first reference image from a simulated satellite image by learning correspondence between the simulated satellite image and the land use map using learning data and based on machine learning, the learning data including combination of the simulated satellite image and the land use map, the first reference image being a reference high-resolution image having a higher resolution than a resolution of a first satellite image being a target satellite image captured by a target satellite, the simulated satellite image being an image that is generated by applying degradation processing to the first reference image and has a resolution equivalent to the resolution of the first satellite image, wherein
the first satellite image is used in an inference process that uses the learned model.

2. A land use classification system comprising:
an inference device, the inference device including an inference unit to infer a land use map indicating a land use status in an observation area on a first satellite image by inputting the first satellite image to a learned model, the first satellite image being a target satellite image captured by a target satellite, the learned model being a model that is generated by learning correspondence between a simulated satellite image and the land use map using learning data and based on machine learning and that infers the land use map from the simulated satellite image, the learning data including combination of the simulated satellite image and a land use map indicating a land use status in an observation area on a first reference image, the first reference image being a reference high-resolution image having a higher resolution than a resolution of the first satellite image, the simulated satellite image being an image that is generated by applying degradation processing to the first reference image and has a resolution equivalent to the resolution of the first satellite image.

3. The land use classification system according to claim 1 or 2, wherein
the reference high-resolution image is an image captured with either an aerial imagery means or a satellite capable of capturing an image of a higher resolution than a resolution of the target satellite image.

4. The land use classification system according to any one of claims 1 to 3, wherein
the degradation processing is processing for simulating degradation of an image due to at least one of sensor layout on the target satellite, PSF (Point Spread Function) characteristics of the target satellite, GSD (Ground Sampling Distance) of the target satellite, sensitivity performance of the target satellite, noise characteristics of the target satellite, data compression processing during generation of the target satellite image, and quantization processing during generation of the target satellite image.

5. The land use classification system according to any one of claims 1 to 4, wherein
the degradation processing is processing that performs down-sampling with offsets that are different from each other according to wavelength bands in the down-sampling of the reference high-resolution image.

6. The land use classification system according to any one of claims 1 to 5, wherein
the learning data contains a pair of a second satellite image and a land use map indicating a land use status in an observation area on a second reference image, the second satellite image being the target satellite image that includes observation results for the same area as the observation area on the second reference image, the second reference image being the reference high-resolution image,
the land use classification system further includes an input image generation device including
a degradation processing unit to perform the degradation processing, and
an alignment unit to generate an aligned satellite image as an image corresponding to the second satellite image by performing alignment processing between the second reference image and the second satellite image, and
the learned model is a model that is generated by learning correspondence between the second satellite image and a land use map corresponding to the second reference image based on machine learning and that infers the land use map corresponding to the second reference image from the second satellite image.

7. The land use classification system according to any one of claims 1 to 6, wherein
the target satellite image is an image captured with exposure to a light ray with a wavelength in a visible light band.

8. The land use classification system according to any one of claims 1 to 7, wherein
the target satellite image is an image captured with exposure to a light ray with a wavelength in an infrared light band.

9. A land use classification method comprising:
by a computer as a learning device, generating a learned model for inferring a land use map indicating a land use status in an observation area on a first reference image from a simulated satellite image by learning correspondence between the simulated satellite image and the land use map using learning data and based on machine learning, the learning data including combination of the simulated satellite image and the land use map, the first reference image being a reference high-resolution image having a higher resolution than a resolution of a first satellite image being a target satellite image captured by a target satellite, the simulated satellite image being an image that is generated by applying degradation processing to the first reference image and has a resolution equivalent to the resolution of the first satellite image, wherein
the first satellite image is used in an inference process that uses the learned model.

10. A land use classification program that causes a learning device as a computer to execute:
a model generation process of generating a learned model for inferring a land use map indicating a land use status in an observation area on a first reference image from a simulated satellite image by learning correspondence between the simulated satellite image and the land use map using learning data and based on machine learning, the learning data including combination of the simulated satellite image and the land use map, the first reference image being a reference high-resolution image having a higher resolution than a resolution of a first satellite image being a target satellite image captured by a target satellite, the simulated satellite image being an image that is generated by applying degradation processing to the first reference image and has a resolution equivalent to the resolution of the first satellite image, wherein
the first satellite image is used in an inference process that uses the learned model.

11. A land use classification method comprising:
by a computer as an inference device, inferring a land use map indicating a land use status in an observation area on a first satellite image by inputting the first satellite image to a learned model, the first satellite image being a target satellite image captured by a target satellite, the learned model being a model that is generated by learning correspondence between a simulated satellite image and the land use map using learning data and based on machine learning and that infers the land use map from the simulated satellite image, the learning data including combination of the simulated satellite image and a land use map indicating a land use status in an observation area on a first reference image, the first reference image being a reference high-resolution image having a higher resolution than a resolution of the first satellite image, the simulated satellite image being an image that is generated by applying degradation processing to the first reference image and has a resolution equivalent to the resolution of the first satellite image.

12. A land use classification program that causes an inference device as a computer to execute:
an inference process of inferring a land use map indicating a land use status in an observation area on a first satellite image by inputting the first satellite image to a learned model, the first satellite image being a target satellite image captured by a target satellite, the learned model being a model that is generated by learning correspondence between a simulated satellite image and the land use map using learning data and based on machine learning and that infers the land use map from the simulated satellite image, the learning data including combination of the simulated satellite image and a land use map indicating a land use status in an observation area on a first reference image, the first reference image being a reference high-resolution image having a higher resolution than a resolution of the first satellite image, the simulated satellite image being an image that is generated by applying degradation processing to the first reference image and has a resolution equivalent to the resolution of the first satellite image.
